# FASCICULE DE BREVET EUROPEEN

(11) **EP 3 206 995 B1**
(45) Date de publication et mention de la délivrance du brevet: **10.10.2018**
(21) Numéro de dépôt: 15750961.3
(22) Date de dépôt: 30.07.2015
(51) Int. Cl.: C02F 1/46, C02F 1/469, C02F 103/08

(54) **MICRORÉACTEUR ET PROCÉDÉ DE DESSALEMENT DE L'EAU SALÉE**
MIKROREAKTOR UND VERFAHREN ZUR ENTSALZUNG VON SALZWASSER
MICROREACTOR AND METHOD FOR DESALINATING SALT WATER

(30) Priorité: 13.10.2014 LU 92571
(43) Date de publication de la demande: 23.08.2017
(73) Titulaire: Trouve, David, 34270 Vacquières (FR)
(72) Inventeur: GUERIN, Louis, L-3937 Mondercange (LU); TROUVE, Emmanuel, F-34270 Vacquières (FR)
(74) Mandataire: Dennemeyer & Associates S.A.
(86) Numéro de dépôt international: PCT/EP2015/067575
(87) Numéro de publication internationale: WO 2016/058722

(56) Documents cités:
- DE-U1- 20 315 557
- US-A- 4 073 712
- US-A1- 2014 197 034

## Description

La présente invention concerne un microréacteur de dessalement d'eau salée selon la revendication 1 et un procédé de dessalement selon la revendication 15.

Aucune société ne peut survivre sans eau douce. Parmi toute la quantité d'eau disponible sur terre, seulement 1% est disponible pour les plantes, les animaux et les humains, 97% de l'eau se trouve dans les océans et les 2% restant sont stockés dans les glaces des pôles et des glaciers.

La surexploitation des réserves d'eau fraiche devient un problème de plus en plus important dans beaucoup de parties du monde. Des estimations prédisent, qu'en 2030, deux tiers de la population mondiale va souffrir de pénuries d'eau. Selon l'UNESCO en 2025, 75% de la population mondiale vivra à moins de 60 km de la mer, la méthode la plus simple et efficace pour obtenir de l'eau douce est donc de dessaler l'eau de mer.

Il existe deux grandes catégories de techniques de dessalement : des processus thermiques ou des processus à base de membranes.
Parmi les techniques thermiques les méthodes connues les plus utilisées sont :
La distillation à effet simple : cette technique à un rendement faible.
La distillation à effet multiples (MED), aussi bien connue de l'art antérieur. Cette méthode augmente fortement le rendement, comparé à celui d'une distillation à effet simple.
Une autre amélioration significative est apportée par la technique dite de compression de vapeur.
Un procédé par détentes successives ou procédé Flash (MSF) : un des problèmes majeurs des techniques MED est celui de l'entartage. Afin d'y remédier, la technique MSF a été développée dans les années 1960.
Un procédé de distillation par compression de vapeur (MVC).

Parmi les procédés membranaires les méthodes connues les plus utilisées sont : l'électrodialyse (ED), l'osmose inverse (RO) et la distillation membranaire (MD).

Les procédés décrits plus haut sont les plus importants et ensemble ils représentent plus de 90% des méthodes de désalinisation utilisées dans le monde. Il existe encore d'autres méthodes connues de moindre importance et qui sont les suivantes:
Procédés de cristallisation : désalinisation par gel ; procédés d'hydratation gazeuse.
Procédés d'humidification : humidification - déshumidification ; évaporation solaire - effet de serre ; d'évaporation.
Procédé d'échangeur d'ions.
Procédé d'extraction liquide-liquide.
Procédé de Flow-Through Capacitors (FTC): ce procédé est assez similaire au procédé d'électrodialyse en ce sens que les ions sont séparés sous l'effet d'un champ électrique. Cependant, contrairement à l'électrodialyse, la méthode FTC n'utilise pas de membranes, mais les ions sont collectés sur des électrodes poreuses, comme par exemple des aérogels. La tension appliquée est modérée, ceci afin d'empêcher des réactions électrochimiques de se produire. Le procédé se compose de deux cycles. Lors du premier cycle, dit cycle de désalinisation, une différence de potentiel électrique est appliquée aux électrodes entre lesquelles circule l'eau salée. Les ions migrent vers leurs électrodes respectives et s'y fixent. A la sortie du système sort une eau dessalée. Après un certain temps, les électrodes sont saturées en ions. A ce moment commence le deuxième cycle, dit de régénération : les tensions sont inversées aux électrodes et les ions sont libérés. A la sortie du système, l'eau est hautement salée. Ensuite le premier cycle recommence.

DE 20315557 décrit un appareil de dessalement dans lequel l'eau salée passe par des électrodes qui sont chargées électriquement, soit avec des charges positives, soit avec des charges négatives. Les électrodes sont recouvertes d'un isolant plastique et elles sont aussi revêtues d'une couche échangeuse d'ions, soit anodique, soit cathodique. Ces couches adsorbent les ions Na⁺ et Cl⁻ de l'eau de mer, ce qui constitue une première différence essentielle avec la présente invention, car cette dernière ne comporte pas d'opération d'adsorption-relargage. DE 20315557 montre que l'eau coule en continue sur les électrodes. En raison de l'adsorption des ions, les électrodes se chargent et perdent de leur efficacité: La polarité doit alors être renversée, afin de libérer les ions: cela implique que le flux d'eau dessalée sera discontinu, en batch séquencé, ce qui constitue une seconde différence essentielle avec la présente invention, cette dernière mettant en oeuvre un flux continu d'eau dessalée. DE 20315557 utilise bien des électrodes qui sont isolées de l'eau par du plastique. Néanmoins, les électrodes ont une forme complétement différente que celles de la présente invention. Dans DE 20315557, la forme utilisée est une forme de barres/fils métalliques enrobés par du plastique. De plus, au-dessus du plastique se trouve une couche d'adsorption d'ions. La couche de plastique sert donc dans une grande partie de support à cette couche d'absorption. Les électrodes sont ensuite assemblées et mises dans un canal dans lequel circule l'eau à dessaler. Dans la présente invention, les électrodes ont une section rectangulaire et sont montées dans les parois du canal. Le plastique sert uniquement d'isolant et ne reçoit pas de couche d'absorption d'ions. La différence essentielle est que dans la présente invention une fonction principale du plastique est de former le canal principal. De plus, le principe de fonctionnement de DE 20315557 et de la présente invention est différent. DE 20315557 est basé, comme la présente invention, sur le principe de la dés-ionisation capacitive. Mais DE 20315557 fonctionne selon le principe classique de cette méthode, à savoir qu'il y a des adsorptions et désorptions successives et que le flux d'eau dessalé n'est pas continue, contrairement à ce qui se passe dans la présente invention.

US 2014/197034 décrit une méthode de dessalement, où l'eau de mer circule longitudinalement dans un canal dont la section de passage est en forme de V ou de Y. Sur les parois inclinées du réservoir, des courroies circulent. Elles sont entraînées par un système de moteur et de poulies extérieurs au réservoir. Les courroies entrent par le haut du réservoir et sortent par le bas, à l'endroit où les parois inclinées se rejoignent: Sur les parois inclinées sont fixées des électrodes qui seront chargées positivement ou négativement. Les courroies sont faites d'un film plastique. Des électrodes flexibles y sont fixées. Lors du déplacement des courroies, le film diélectrique est dirigé vers la paroi et les électrodes flexibles sont dirigées du côté de l'eau. En passant devant les électrodes fixes, les électrodes flexibles vont se charger et attirer les ions mobiles de l'eau salée, ce qui constitue une première différence essentielle avec la présente invention, car cette dernière ne comporte pas d'opération d'adsorption-relargage. Ces ions vont rester fixés sur les courroies jusqu'au moment où les courroies quittent le réservoir par le fond de l'entonnoir. Les électrodes flexibles seront déchargées et les ions vont être libérés et se recombiner en sel. Le système et l'infrastructure correspondante sont assez complexes, toutefois il ressort clairement que l'eau dessalée doit parcourir une distance significative dans cet ouvrage de grande taille non étanche, ce qui constitue une autre différence essentielle avec la présente invention qui au contraire requière la mise en oeuvre de micro-réacteurs de très petite taille, la capacité totale requise étant atteinte par la multiplication du nombre de micro-réacteurs dans un ordonnancement approprié (numering up plutôt que scale up). US 2014/197034 décrit bien un système de dessalement, mais fonctionnant sur un principe différent de la présente invention. De plus, les films plastiques des courroies dans US 2014/197034 servent simplement de support pour des électrodes flexibles qui sont en contact direct avec l'eau. Aucun système d'étanchéité n'est mentionné dans ce document.

US 4073712 décrit un système, où à l'aide d'un champ électrique, de l'eau est traitée et purifiée. Ce système n'est pas utilisé pour le dessalement, mais plutôt pour enlever des particules colloïdales et pour empêcher leurs formations, ce qui constitue une différence essentielle avec la présente invention. Les électrodes pour créer le champ électrique sont recouvertes d'une couche plastique. Toutefois leur forme est différente de celles que nous utilisons. En plus les tensions appliquées de l'ordre de plusieurs kV sont beaucoup plus élevées que dans la présente invention (moins de 100 V), ce qui constitue une autre différence essentielle. De plus, US 4073712 ne comprend pas de système de séparation en deux flux, l'un d'eau salée et l'autre d'eau dessalée, ce qui constitue encore une autre différence essentielle avec la présente invention qui comprend un dispositif de séparation nouveau, un séparateur coaxial doté d'un biseau original pour obtenir une séparation optimale et continue des deux flux cités. US 4073712 vise une toute autre application que la présente invention et sa construction est complètement différente que celle de la présente invention.

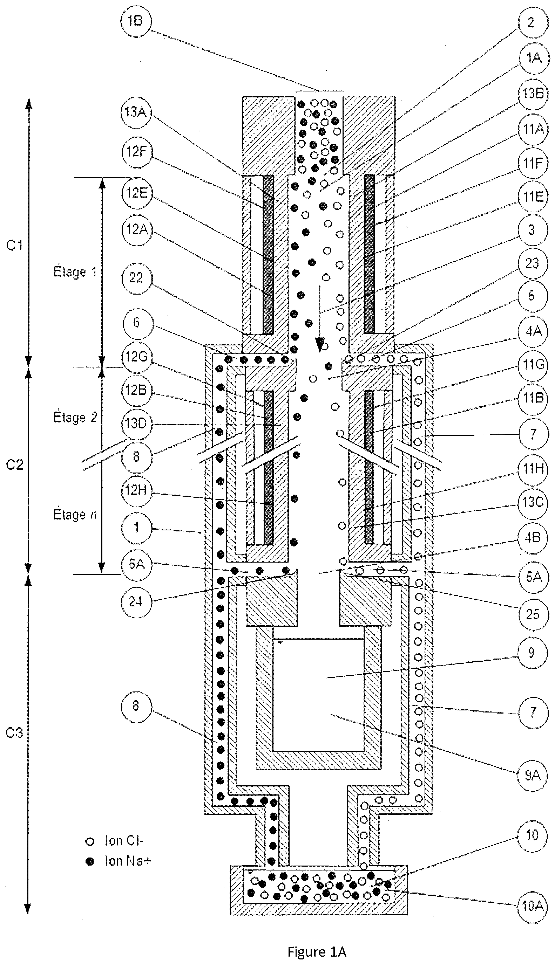

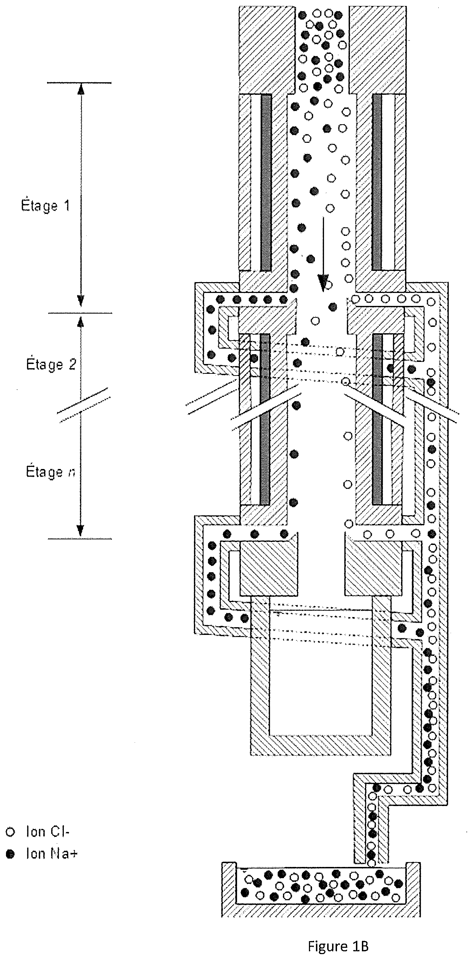

La différence entre la présente invention et l'art antérieur est que lesdites premières et secondes électrodes cathodiques (11A,11B) et lesdites premières et secondes électrodes anodiques (12A,12B) possèdent respectivement chacune une première face (11F,11G,12F,12G) en contact avec de l'air et une seconde face (11E,11H,12E,12H) opposée à ladite première face, ladite seconde face étant en contact direct avec une paroi en plastique (13B,13C,13A,13D), laquelle paroi en plastique (13B,13C,13A,13D) est directement en contact avec le fluide salé (2) (voir figure 1).
L'effet technique associé à cette différence est de diminuer les besoins énergétiques par rapport à l'art antérieur (voir tableau 1).
Au contraire, DE 20315557 divulgue une électrode entièrement enrobée par un anneau en plastique, ledit plastique étant en contact avec de l'eau salée et US 2014/0197034 divulgue un dispositif à courroies non étanche à l'eau de mer de sorte qu'au-moins une face longitudinale des électrodes est en contact direct avec l'eau de mer.
Aucun document ne montre la combinaison des éléments techniques suivants :
eau salée-paroi en plastique-électrode-air.

La présente invention résout le problème de dessaler l'eau de mer en améliorant le rendement nécessaire en énergie, càd en diminuant les besoins énergétiques. L'eau de mer contient typiquement 20000 à 40000 ppm (mg/l) de substances solides dissoutes, la majeure partie étant du sel de chlorure de sodium (Na⁺Cl⁻) (75%). Les besoins énergétiques nécessaires pour enlever ce sel pour les différentes techniques de dessalement utilisées aujourd'hui sont résumés dans le tableau 1 suivant :

**Tableau 1 :**

| Energie (MJ/m³) | Energie (kWh/m³) | Méthode (pour un dessalement avec r=50%) |
|---|---|---|
| 2,8 | 1,0 | Limite théorique inférieure pour un dessalement complet |
| 3,1-3,6 | 1,26 | Présente invention |
| 6,7-13,3 | 2,0-3,75 | déionisation électrique classique : DE 20315557 et US 2014/197034 |
| 14,3 | 4,0 | Flash avec récupération d'énergie |
| 10,8-16,6 | 3,0-4,6 | FTC (électrique) |
| 18,1 | 3,125-8,75 | Uniquement osmose inverse |
| 21,9-25,7 | 6,1-7,1 | Uniquement Flash |
| | 3,75-18,75 | Thermique |

Il ressort du tableau 1 que les besoins en énergie des méthodes de dessalement connues sont très élevés. Des techniques plus économes sont nécessaires afin de permettre le dessalement de grandes quantités d'eau de mer à de faibles coûts.
Le microréacteur de la présente invention nécessite la plus faible consommation d'énergie.

Le problème que la présente invention se propose de résoudre est de remédier aux inconvénients de l'art antérieur en mettant en oeuvre des méthodes nécessitant des besoins énergétiques proches de la limite théorique pour un dessalement complet de l'eau. La limite théorique est mentionnée dans le tableau 1 ci-dessus.

La solution au problème mentionné précédemment consiste à faire migrer les ions (Na⁺Cl⁻) d'une eau salée, de façon continue, et en utilisant le minimum de force motrice (champ électrique), puis à séparer l'eau enrichie en ions (concentrât) de l'eau dessalée par un écoulement gravitaire à travers un dispositif de séparation.
La méthode proposée se différentie fortement de la technique classique FTC (*flow through capacitors*) qui met en oeuvre une succession de batchs et utilise une quantité importante d'énergie.

Dans la présente invention les électrodes cathodiques et anodiques ne sont pas en contact direct avec l'eau car une paroi lisse et étanche en matière plastique sépare les électrodes et l'eau salée. Aucun courant électrique ne circulera à travers le liquide (salé ou non salé) pendant le fonctionnement du dispositif. Les ions Na⁺ et Cl⁻ séparés vont s'accumuler le long des parois du canal contigu à l'électrode ayant une charge électrique opposée à celle des ions dans le liquide. Les fractions d'eau contenant les ions Na⁺ et Cl⁻ sont éliminées par des ouvertures latérales dans le canal respectif recevant ces ions. Il s'en suit que la principale fraction de l'eau sortant du système est dessalée de manière continue.

Les avantages que procure la présente invention sont les suivants :
- pas de parois poreuses, donc pas de contact direct entre les électrodes et le liquide (suppression du contact ions/eau - électrodes).
- suppression de toute circulation de courant électrique dans le canal et donc dans l'eau.
- fonctionnement en continu contrairement au dessalement cyclique (séquencé) d'une installation FTC standard.
- combinaison d'un procédé utilisant un faible courant avec des microréacteurs.

Le dispositif de dessalement d'eau salée de la présente invention est défini à la revendication 1 et le procédé de dessalement de la présente invention est défini à la revendication 15.

La réaction chimique se produisant peut être définie comme suit :

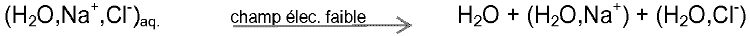

La présente invention concerne un microréacteur (1) de dessalement d'un fluide salé (2) de forme allongée comportant au moins un compartiment (C1) de migration des ions, au moins un compartiment (C2) de séparation des ions et au moins un compartiment (C3) collecteur de fluide: ledit compartiment (C1) de migration des ions comprenant :
- au-moins une ouverture (1B) d'entrée du fluide salé (2),
- au-moins un canal principal (1A) d'écoulement du fluide salé (2) définissant un axe longitudinal sensiblement vertical,
- au-moins une première électrode cathodique (11A) et au-moins une première électrode anodique (12A),
- au-moins un premier canal latéral supérieur (6) d'évacuation des cations sensiblement perpendiculaire audit canal principal (1A),
- au-moins un second canal latéral supérieur (5) d'évacuation des anions sensiblement perpendiculaire audit canal principal (1A),
ledit compartiment (C2) de séparation des ions comprenant :
- au moins une lèvre supérieure gauche (22) et au moins une lèvre supérieure droite (23) faisant saillie à l'intérieur du canal principal (1A) permettant de recueillir les ions,
- au-moins une seconde électrode cathodique (11B) et au-moins une seconde électrode anodique (12B),
- au-moins un premier canal latéral gauche (8) d'évacuation des cations sensiblement parallèle audit canal principal (1A),
- au-moins un second canal latéral droit (7) d'évacuation des anions sensiblement parallèle audit canal principal (1A),
- ledit canal principal (1A) d'écoulement du fluide salé (2) étant situé entre le premier canal latéral (8) et le second canal latéral (7),
- au-moins un premier canal latéral inférieur (6A) d'évacuation des cations sensiblement perpendiculaire audit canal principal (1A),
- au-moins un second canal latéral inférieur (5A) d'évacuation des anions sensiblement perpendiculaire audit canal principal (1A),
ledit compartiment (C3) collecteur de fluide comprenant :
- au moins une lèvre inférieure gauche (24) et au moins une lévre inférieure droite (25) faisant saillie à l'intérieur du canal principal (1A),
- au-moins un réceptacle interne (9) recueillant un fluide non salé (9A),
- au-moins un réceptacle externe (10) recueillant un fluide hautement salé (10A), caractérisé en ce que lesdites premières et secondes électrodes cathodiques (11A,11B) et lesdites premières et secondes électrodes anodiques (12A,12B) possèdent respectivement chacunes une première face longitudinale (11F,11G,12F,12G) en contact avec de l'air et une seconde face longitudinale (11E,11H,12E,12H) opposée à ladite première face, ladite seconde face étant en contact direct avec une paroi en plastique (13B,13C,13A,13D), laquelle est directement en contact avec le fluide salé (2).

De préférence, l'électrode cathodique (11A,11B) et l'électrode anodique (12A,12B) sont soit collées à la paroi (13A,13B) en plastique ou fixées par pression grâce à une encoche dans la paroi (13A,13B) en plastique ou par toute autre méthode de fixation connue de l'homme du métier.
De préférence, l'électrode cathodique (11A,11B) et l'électrode anodique (12A,12B) sont parallèles à une première paroi (13A) et à une seconde paroi (13B) du canal principal (1A) respectivement.
De préférence, la longueur du compartiment (C1) de migration des ions est comprise entre 35 mm et 55 mm, sa largeur est comprise entre 20 mm et 30 mm et sa hauteur est comprise entre 10 mm et 20 mm.
De préférence, la longueur d'un étage du compartiment (C2) de séparation des ions est comprise entre 30 mm et 50 mm, sa largeur est comprise entre 10 mm et 25 mm et sa hauteur est comprise entre 7 mm et 20 mm.
De préférence, la longueur du compartiment (C3) collecteur de fluide est comprise entre 35 mm et 55 mm, sa largeur est comprise entre 20 mm et 30 mm et sa hauteur est comprise entre 10 mm et 20 mm.
De préférence, lesdites première et seconde électrodes anodiques (12A,12B) sont placées dans le prolongement vertical l'une de l'autre et lesdites première et seconde électrodes cathodiques (11A, 11B) sont aussi placées dans le prolongement vertical l'une de l'autre.
De préférence, ledit canal latéral supérieur (6) d'évacuation des cations sépare physiquement lesdites première et seconde électrodes anodiques (12A,12B) et ledit canal latéral supérieur (5) d'évacuation des anions sépare physiquement lesdites première et seconde électrodes cathodiques (11A,11B).
De préférence, lesdites lèvres supérieures gauches (22) et droites (23) sont de forme pointues avec une partie biseauté faisant face respectivement audit premier canal latéral supérieur (6) d'évacuation des cations et audit second canal latéral supérieur (5) d'évacuation des anions.
De préférence, lesdites lèvres inférieures gauches (24) et droites (25) sont de forme pointues avec une partie biseauté faisant face respectivement audit premier canal latéral inférieur (6A) d'évacuation des cations et audit second canal latéral inférieur (5A) d'évacuation des anions.
De préférence, le microréacteur comprend un champ électrique entre les électrodes (11) et (12) qui possède une valeur comprise entre 0,1 et 1000 kV.m⁻¹, de préférence entre 0,2 et 100 kV.m⁻¹, préférentiellement entre 0,5 et 5 kV.m⁻¹.
De préférence, le microréacteur comprend plusieurs compartiments identiques (C2) de séparation des ions qui peuvent être empilés les uns sur les autres.
De préférence, le microréacteur comprend une pluralité de compartiments (C2) de séparation des ions, lesdits compartiments (C2) étant mis en série.
De préférence, le microréacteur comprend une pluralité de compartiments (C2) de séparation des ions, lesdits compartiments (C2) étant mis en parallèle.
De préférence, le microréacteur comprend une pluralité de compartiments (C2) de séparation des ions, ledit microréacteur étant mis en cassette.
La présente invention comprend aussi un procédé de dessalement d'un fluide salé (2) dans un microréacteur défini à la revendication 1, comprenant les étapes suivantes :
- première migration des anions vers au moins une première électrode cathodique (11A) et des cations vers au-moins une première électrode anodique (12A),
- séparation respective des cations et des anions de part et d'autre du canal principal (1A) au moyen d'au-moins une lèvre supérieure (22 ;23) faisant saillie vers l'intérieur du canal principal (1A) d'écoulement du fluide salé (2),
- seconde migration des anions vers au moins une seconde électrode cathodique (11B) et des cations vers au-moins une seconde électrode anodique (12B),
- réception d'un fluide non salé dans un réservoir (9) et d'un fluide hautement salé dans un réservoir (10), caractérisé par
- une mise en contact avec de l'air respectivement d'une première face (11F,11G,12F,12G) desdites premières et secondes électrodes cathodiques (11A,11B) et desdites premières et secondes électrodes anodiques (12A,12B) et,
- par une mise en contact direct avec une paroi en plastique (13B,13C,13A,13D) d'une seconde face (11E,11H,12E,12H) opposée à ladite première face (11F,11G,12F,12G) desdites premières et secondes électrodes cathodiques (11A,11B) et desdites premières et secondes électrodes anodiques (12A,12B) et,
- par une mise en contact direct avec le fluide salé (2) de ladite paroi en plastique (13B,13C,13A,13D).

De préférence, ladite électrode cathodique (11) et ladite électrode anodique (12) sont en contact sur toute leur longueur d'une part avec la paroi (13) en plastique du canal principal (1A) et d'autre part avec de l'air ou avec une paroi de maintien.
De préférence, la paroi (13) en plastique du canal principal (1A) est étanche à tout liquide. De préférence, l'ouverture d'entrée (1B) du fluide salé (2) possède une largeur comprise entre 0,1 mm et 20 mm, de préférence entre 0,2 mm et 10 mm, préférentiellement entre 0,5 mm et 5 mm.
De préférence, le dispositif selon la présente invention possède une longueur totale comprise entre 5 mm et 200 mm, de préférence entre 10 mm et 100 mm, préférentiellement entre 20 et 60 mm.
La vitesse d'écoulement du fluide (2) dans le canal principal (1A) est comprise entre 1 et 1000 mm.s⁻¹, de préférence entre 2 et 500 mm.s⁻¹, préférentiellement entre 3 et 50 mm.s⁻¹. Un champ électrique (22) est créé entre les électrodes (11) et (12) et ce champ possède une valeur comprise entre 0,1 et 1000 kV.m⁻¹, de préférence entre 0,2 et 100 kV.m⁻¹, préférentiellement entre 0,5 et 5 kV.m⁻¹.
De préférence, le dispositif comprend au-moins une lèvre faisant saillie vers l'intérieur du canal principal (1A) d'écoulement du fluide salé (2).
Le dispositif selon la présente invention possède, en coupe longitudinale, une forme carrée, rectangulaire, ou ovale.
De préférence, ledit premier canal latéral (6;8) d'évacuation des cations et ledit second canal latéral (5;7) d'évacuation des anions sont en forme de L.
La branche horizontale (5;6) du L est sensiblement orthogonale audit canal principal (1A) et auxdites électrodes (11 ;12).
La branche verticale (7 ;8) du L est sensiblement parallèle audit canal principal (1A) et auxdites électrodes (11 ;12).
Plusieurs compartiments de séparation des ions peuvent être juxtaposés les uns aux autres dans le dispositif de la présente invention.
Dans un premier mode de réalisation, la présente invention concerne aussi un appareil comprenant une pluralité de dispositifs, lesdits dispositifs pouvant être mis en série.
Dans un second mode de réalisation, la présente invention concerne aussi un appareil comprenant une pluralité de dispositifs, lesdits dispositifs pouvant être mis en parallèle. Dans un troisième mode de réalisation, la présente invention concerne aussi un appareil comprenant une pluralité de dispositifs, lesdits dispositifs étant mis en cassette (càd en format de boite).
La présente invention concerne un procédé de dessalement d'un fluide salé (2) dans un dispositif selon la présente invention, comprenant les étapes suivantes :
- migration des anions vers au moins une électrode cathodique (11) et des cations vers au-moins une électrode anodique (12),
- séparation respective des cations et des anions de part et d'autre du canal principal (1A) au moyen d'au-moins une lèvre (22,23,24,25)faisant saillie vers l'intérieur du canal principal (1A) d'écoulement du fluide salé (2),
- réception d'un fluide non salé dans un réservoir (9) et d'un fluide hautement salé dans un réservoir (10).

### La présente invention est décrite dans les figures suivantes :

- Figure 1A :: représente un premier mode de réalisation du système de dessalement de la présente invention (dessin pas à l'échelle).
- Figure 1B :: représente un second mode de réalisation du système de dessalement de la présente invention (dessin pas à l'échelle).
- Figure 2 :: représente une cellule de base de la présente invention montrant une lèvre (23) faisant saillie à l'intérieur du canal principal (1A) (dessin pas à l'échelle). Le coeur du système est le séparateur. Ce séparateur garanti que l'eau chargée en sel sorte du canal par les ouvertures et que l'eau dessalée reste dans le système.
- Figure 3 :: représente un graphique montrant une concentration en ions dans un canal latéral avec un champ électrique et un profil de vitesse dans ce canal.
- Figure 4 :: représente un graphique montrant une concentration ionique en fonction de leur position le long d'un canal latéral.
- Figure 5 :: représente un graphique montrant une concentration en Na⁺Cl⁻ en fonction du nombre d'étages.
- Figure 6 :: représente un graphique montrant la concentration de sel à la sortie en fonction de la concentration du sel à l'entrée pour 1, 2 et 3 étages de dessalement.

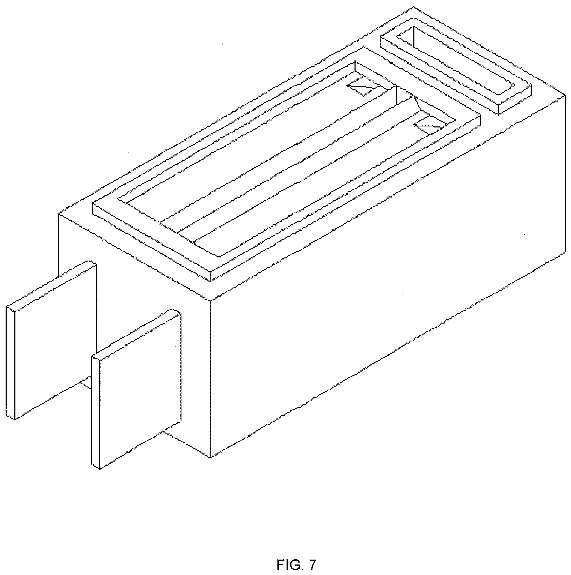

- Figure 7 :: représente une vue en perspective d'un étage de dessalement de la présente invention.

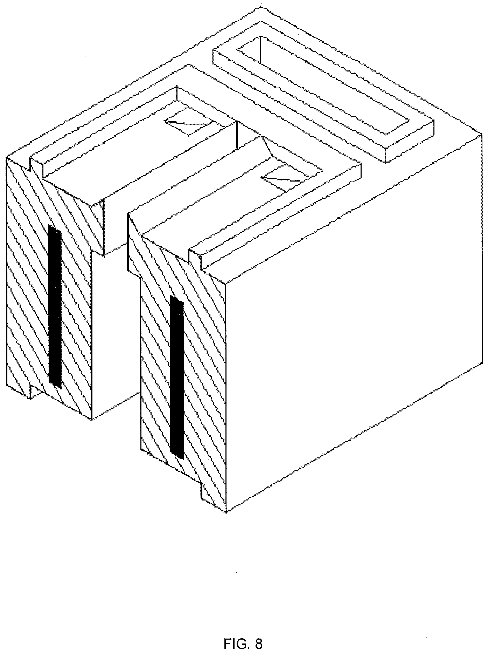

- Figure 8 :: représente une coupe en perspective à travers un étage de dessalement (dessin pas à l'échelle) de la présente invention, les rectangles noirs correspondant aux deux électrodes.

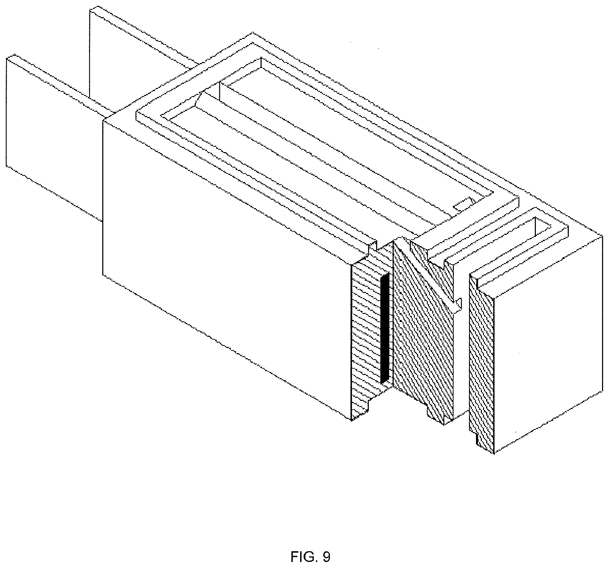

- Figure 9 :: représente une coupe montrant un canal d'évacuation de l'eau hautement concentrée en sel (dessin pas à l'échelle), le rectangle noir correspondant à une électrode.

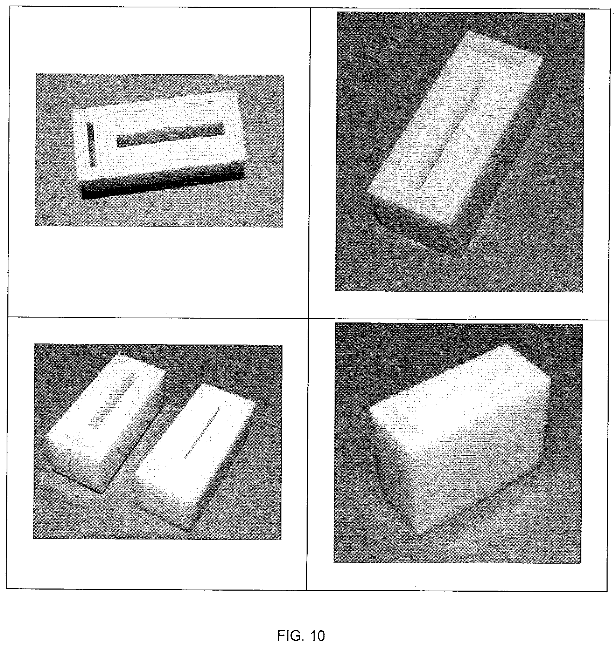

- Figure 10 :: représente une vue du dessous du dispositif de la présente invention (en haut à gauche), une vue du dessus du dispositif de la présente invention (en haut à droite), un dispositif avec vue sur le dessus et un dispositif avec vue sur le dessous cote à cote (en bas à gauche) et deux dispositifs assemblés (en bas à droite). Le dispositif possède les dimensions suivantes : 42 mm (longueur) x 18 mm (largeur) x 17 mm (hauteur).
- Figure 11 :: représente les besoins énergétiques minimaux théoriques pour les dessalements (courbe en pointillé) et pour la présente invention (courbe en trait plein)
- Figure 12 :: représente l'effet du potentiel appliqué aux électrodes sur le dessalement. Plus le potentiel augmente, plus le champ électrostatique à l'intérieur du canal est fort et plus le dessalement est important.

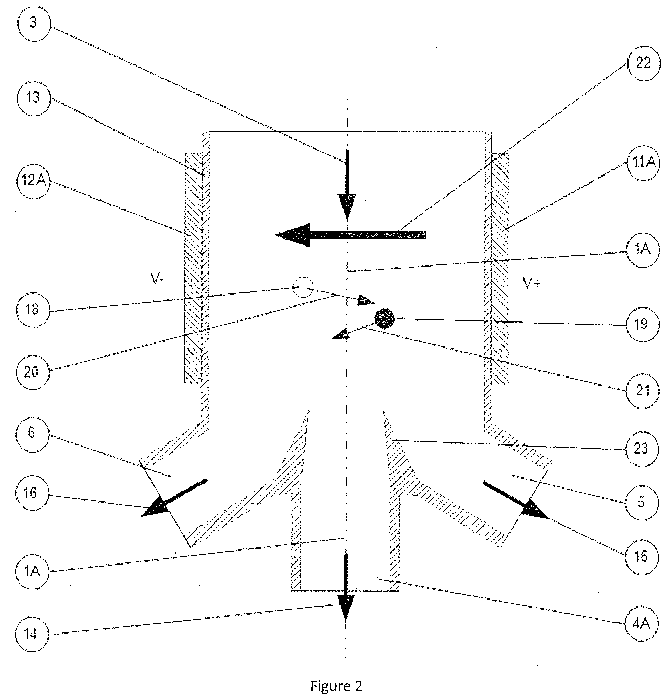

La figure 2 montre le principe de base du microréacteur (1) de dessalement de la présente invention, notamment que l'eau salée (2) entre par une mince ouverture (1B) dans le canal principal du dispositif et s'écoule de haut en bas (3) par effet de gravitation. Le système est composé de différents étages - de 1 à n - identiques. Dans chaque étage l'eau salée est soumise à un champ électrique induit par une différence de potentiel entre les électrodes (11A) et (12A). Les électrodes sont isolées de l'eau par une paroi (13A;13B) lisse et étanche en matière plastique. L'effet de ce champ est que les ions positifs (19), i.e. Na⁺, et négatifs (18), i.e. Cl⁻, dissouts dans l'eau, sont attirés vers les parois par l'effet des électrodes (cathode et anode). Les ions migrent (20;21) vers les parois respectives, où leur concentration va augmenter. En même temps, les ions qui n'ont pas migré vers les parois (13) descendent dans le canal principal (1A) par gravité. En bas de chaque étage, une partie de l'eau fortement concentrée est prélevée du canal principal par un canal de sortie (5) pour les ions négatifs et un canal de sortie (6) recevant les ions positifs. Ce qui sort dans la partie inférieure et dans la partie centrale du canal principal de chaque étage (4) est une eau à plus faible concentration ionique que l'eau qui y est entrée initialement. L'eau hautement concentrée en ions passe ensuite par les canaux (7) recevant les ions négatifs et les canaux (8) recevant les ions positifs et est collectée dans le réservoir (10) à forte concentration en ions positifs et négatifs. L'eau dessalée est récupérée dans le réservoir (9) recevant l'eau potable.

La figure 2 montre un étage de séparation individuel. De chaque côté du canal deux électrodes ((11) et (12)) sont présente et elles sont séparées du canal principal et du fluide (liquide) par une mince paroi (13) étanche et lisse en matière plastique. Cette séparation est très importante car elle isole électriquement les électrodes du fluide (eau salée). Cette structure peut être comparée à un condensateur électrique ayant une résistance électrique interne très élevée. Il s'en suit qu'aucun courant électrique ne peut passer dans le canal principal et cela implique que la consommation électrique est très faible. L'application d'une différence de potentiel entre les deux électrodes (tension positive à l'électrode (11A) et tension négative à l'électrode (12A) crée un champ électrique (22) entres les deux électrodes. Ce champ électrique est dirigé de l'électrode positive (11A) vers l'électrode négative (12A) et il entraine les ions négatifs (18) vers l'électrode positive et les ions positifs (19) vers l'électrode négative. En plus de ce mouvement, les ions dissouts dans l'eau sont aussi entrainés avec la vitesse (3) du fluide de haut en bas du à la gravité.

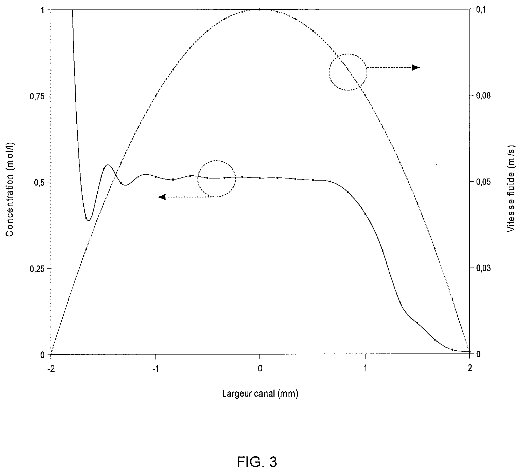

La figure 3 représente un graphique montrant que le profil de la vitesse est de forme parabolique (régime laminaire, écoulement de Poiseuille). Le déplacement net des ions se fait donc vers les côtés en direction des électrodes et vers le bas du dispositif, càd du côté opposé à celui de l'entrée du fluide. A l'interface fluide-paroi, les ions sont immobiles car la vitesse d'écoulement y est nulle. Mais dès que l'on s'éloigne des parois, la vitesse entraine les ions vers le bas. En raison du champ électrique, la concentration des ions est plus importante près des parois. A la sortie de l'étage de séparation, le flux est divisé en trois parties. Cette division est améliorée par le diviseur ou lèvre faisant saillie dans le canal principal. Les deux sorties latérales (5) et (6) sont destinées au fluide hautement concentré en ions ((15) et (16)) et le canal principal (4) évacue l'eau dessalée (14) de manière progressive.

Le graphique de la figure 3, représente le profil de concentration des ions (ici des ions positifs) dans le canal. Les résultats proviennent de simulations par éléments finis. C'est la concentration qui se trouve aux deux tiers de la longueur du canal principal. L'effet du champ électrique est très bien visible. La deuxième courbe donne le profil de vitesse d'écoulement du fluide, la vitesse a bien un profil parabolique.

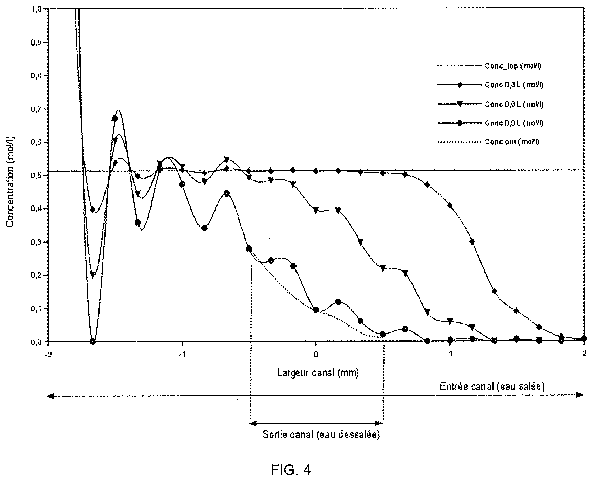

La figure 4 représente des profils de concentration en ions (positifs) à différent endroits le long du canal principal. Cette figure 4 est basée sur des calculs d'éléments finis. La droite horizontale est la concentration à l'entrée du canal principal. Elle est uniforme sur toute la largeur. La courbe avec les diamants représente le profil à une distance de un tiers après l'entrée, l'accumulation des ions près de l'électrode négative est déjà très importante, alors que près de l'électrode positive, la déplétion d'ions positifs commence. Au milieu du canal la concentration est encore assez uniforme. La courbe avec les triangles donne le profil à mi-chemin entre l'entrée et la sortie. Les ions positifs se sont déplacés de plus en plus vers l'électrode négative. La concentration au milieu du canal principal commence à baisser. La courbe avec les cercles indique le profil de concentration juste avant la sortie du séparateur. De nouveau, l'accumulation croissante des ions près de l'électrode est bien visible. Près de l'électrode positive, la concentration en ions positifs est presque nulle et au milieu du canal elle est très faible. La courbe en traits en pointillés représente le profil à la sortie de l'étage. La concentration moyenne a diminué de 78% par rapport à la concentration initiale.
La figure 4 montre des oscillations dans les profils de concentrations qui augmentent le long du canal principal. Ces oscillations proviennent du fait que près de la paroi du canal principal les ions s'accumulent. A partir d'une certaine concentration, de nouvelles charges ne peuvent joindre la paroi et sont repoussées. Le champ électrique appliqué continuant à les diriger vers l'électrode, elles s'accumulent à une certaine distance de la paroi et créent une nouvelle bande et des oscillations dans les profils de concentration.

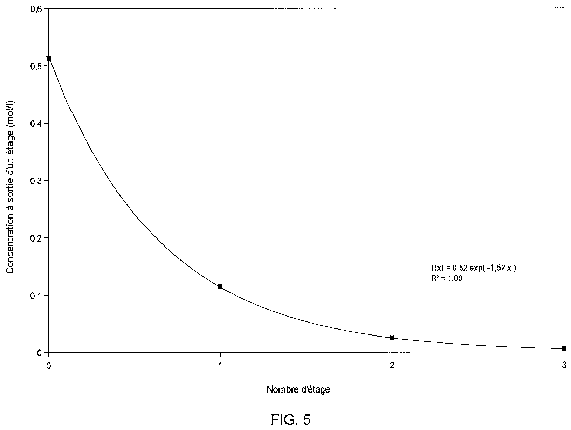

La figure 5 montre l'évolution de la concentration en fonction du nombre d'étages de dessalement. La concentration initiale est (dans cette figure) de 0,513 mole par litre de NaCl, ce qui correspond à la concentration de l'eau de mer. Après 3 étages (n=3) la concentration chute à une valeur de 0,005 mole par litre de NaCl, ce qui est la valeur normale d'une eau potable.

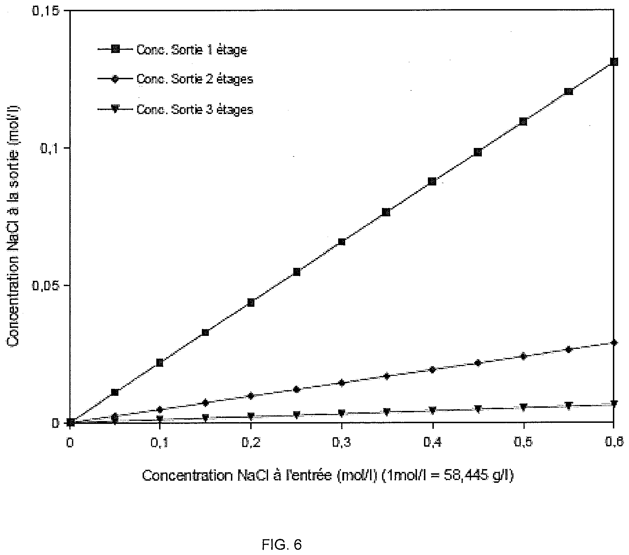

La figure 6 montre que la concentration d'entrée de 0.6 mol/l correspond à une eau de mer hautement concentrée en sel, la concentration moyenne de l'eau de mer étant de 0.51 mol/l.

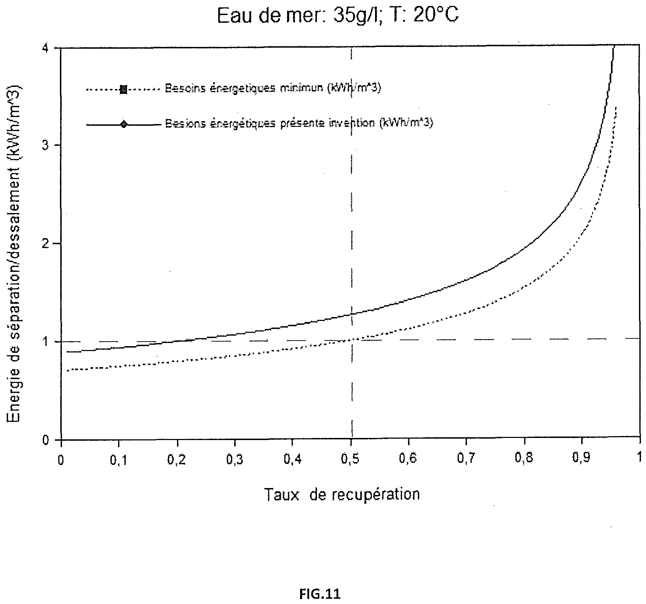

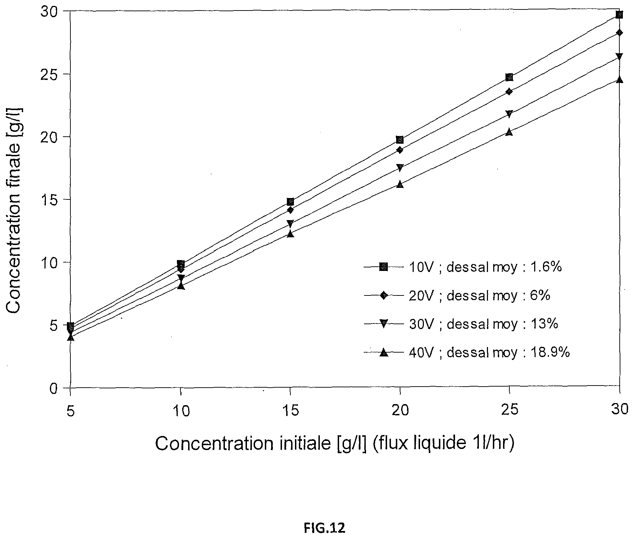

A la figure 11 le taux de récupération « r » est défini comme étant le rapport entre le volume d'eau salée entrant dans le système et le volume d'eau dessalée sortant du même système. Pour un taux « r » de 0,5 le besoin énergétique minimal est de 1 kWh/m³, alors que dans le cas de la présente invention ce besoin est de 1,26 kWh/m³. Il n'est donc que légèrement supérieur au besoin énergétique minimal, ce qui fait du système de la présente invention, un des systèmes les plus performants existant.
Ceci est aussi illustré à la figure 12 donnant différentes valeurs de certaines méthodes de dessalement. Il est bien visible que le microréacteur de la présente invention est le plus économique en énergie et que ses besoins ne sont que légèrement supérieurs aux valeurs de l'énergie théorique minimum. Les valeurs pour la technique de dés-ionisation 'électrique' classique, comme décrit dans les brevets DE20315557 et US2014/0197034, considérés jusqu'à aujourd'hui comme étant les meilleures systèmes disponibles, sont aussi supérieures à la présente invention, impliquant donc que la présente invention possède un rendement bien meilleur à celui de l'art antérieur.

L'unité de base est caractérisée par la mise en place d'un écoulement d'eau salée ou d'eau concentrée en ions Na⁺Cl⁻ dans des veines liquides de faible diamètre hydraulique (**Dh**), compris entre 0,1 mm et 20 mm, 0,1 et 19 mm, 0,1 et 18 mm, 0,1 et 17 mm, 0,1 et 16 mm, 0,1 et 15 mm, 0,1 et 14 mm, 0,1 et 13 mm, 0,1 et 12 mm, 0,1 et 11 mm, 0,1 et 10 mm, 0,1 et 9 mm, 0,1 et 8 mm, 0,1 et 7 mm, 0,1 et 6 mm, 0,1 et 5 mm,
de préférence entre 0,2 mm et 20 mm, 0,2 et 19 mm, 0,2 et 18 mm, 0,2 et 17 mm, 0,2 et 16 mm, 0,2 et 15 mm, 0,2 et 14 mm, 0,2 et 13 mm, 0,2 et 12 mm, 0,2 et 11 mm, 0,2 et 10 mm, 0,2 et 9 mm, 0,2 et 8 mm, 0,2 et 7 mm, 0,2 et 6 mm, 0,2 et 5 mm,
préférentiellement compris entre 0,3 mm et 20 mm, 0,3 et 19 mm, 0,3 et 18 mm, 0,3 et 17 mm, 0,3 et 16 mm, 0,3 et 15 mm, 0,3 et 14 mm, 0,3 et 13 mm, 0,3 et 12 mm, 0,3 et 11 mm, 0,3 et 10 mm, 0,3 et 9 mm, 0,3 et 8 mm, 0,3 et 7 mm, 0,3 et 6 mm, 0,3 et 5 mm,
plus préférentiellement compris entre 0,4 mm et 20 mm, 0,4 et 19 mm, 0,4 et 18 mm, 0,4 et 17 mm, 0,4 et 16 mm, 0,4 et 15 mm, 0,4 et 14 mm, 0,4 et 13 mm, 0,4 et 12 mm, 0,4 et 11 mm, 0,4 et 10 mm, 0,4 et 9 mm, 0,4 et 8 mm, 0,4 et 7 mm, 0,4 et 6 mm, 0,4 et 5 mm,
encore plus préférentiellement compris entre 0,5 mm et 20 mm, 0,5 et 19 mm, 0,5 et 18 mm, 0,5 et 17 mm, 0,5 et 16 mm, 0,5 et 15 mm, 0,5 et 14 mm, 0,5 et 13 mm, 0,5 et 12 mm, 0,5 et 11 mm, 0,5 et 10 mm, 0,5 et 9 mm, 0,5 et 8 mm, 0,5 et 7 mm, 0,5 et 6 mm, 0,5 et 5 mm. Leur section de passage peut être de toute forme géométrique simple (ronde, elliptique, carrée,etc), de préférence de forme rectangulaire.
La longueur totale (**L**) de l'unité de base est comprise entre 5 mm et 200 mm, 6 mm et 190 mm, 7 mm et 180 mm, 8 mm et 170 mm, 9 mm et 160 mm, 10 mm et 150 mm, 11 mm et 140 mm, 12 mm et 130 mm, 13 mm et 120 mm, 14 mm et 110 mm, 15 mm et 100 mm, 16 mm et 90 mm, 17 mm et 80 mm, 18 mm et 70 mm, 19 mm et 60 mm, 20 mm et 50 mm.
La longueur totale (**L**) de l'unité de base est comprise entre 5 mm et 200 mm, de préférence entre 10 mm et 100 mm, préférentiellement entre 20 et 60 mm, plus préférentiellement entre 25 mm et 50 mm et elle se décompose en :
une longueur (**L_{elec}**) durant laquelle l'écoulement se fait sous un champ électrique, dédiée à la migration des ions,
une longueur (**Lₛₑₚ**) durant laquelle l'écoulement est séparé en deux fractions, l'une riche en ions Na⁺Cl⁻ et l'autre appauvrie en ions Na⁺Cl⁻.
La longueur totale (L) étant définie par la distance en mm entre l'entrée (1B) de l'eau salée (2) et le réservoir (10) à forte concentration en ions Na⁺Cl⁻.
L'écoulement est gravitaire, et se fait à une vitesse (***v***) comprise entre 1 et 1000 mm.s⁻¹, de préférence entre 2 et 500 mm.s⁻¹, préférentiellement entre 3 et 50 mm.s⁻¹

Le champ électrique mis en oeuvre est orthogonal à l'écoulement du fluide dans le canal principal, et sa valeur est comprise entre 0,1 et 1000 kV.m⁻¹, de préférence entre 0,2 et 100 kV.m⁻¹, préférentiellement entre 0,5 et 5 kV.m⁻¹.

Un dispositif de séparation concentrique est placé dès la fin de la zone d'application du champ électrique, et il comprend :
au centre un collecteur (en forme de lèvre) faisant saillie à l'intérieur du canal principal (1A) pour récolter la fraction dessalée ou dé-ionisée de l'eau, de rayon Rₒᵤₜₚ déterminé par le gradient de concentration des ions à la paroi de la veine liquide.
En périphérie se trouve un collecteur annulaire de la fraction de l'eau concentrée en ions ou en sels.
Sur chacune de ces deux sorties, peuvent se trouver des dispositifs synchronisés de régulation des vitesses d'écoulement, lesdits dispositifs pouvant être passifs (syphon) ou actif (vanne de régulation).
Alternativement, les sous-fractions riches en cations et en anions peuvent ne pas être mélangées, et le système produit alors trois fractions au lieu de deux.

Pour atteindre les capacités requises pour les applications industrielles du procédé de dessalement ou de déionisation de la présente invention, le principe de « numering up » est appliqué, et se traduit par les éléments suivants :
- les unités de base restent de dimensions optimales : elles sont donc de la famille des micro réacteurs,
- un grand nombre d'unités de base peuvent être associées en parallèle par un système de plaques de zones de migration (ZM) et de plaques de zones de séparation (ZS),
- dans une construction alternative, une pièce de migration (zm) et une pièce de séparation (zs) peuvent être préassemblées en une pièce unique (zm+zs), et une pluralité desdites pièces uniques constitue une plaque complète (ZM+ZS)
- les plaques de zones de séparation sont déclinées dans une gamme selon les applications (sea HC, sea LC, brackish, industry mono ION, industry pluri ION, ...)
- un nombre n de plaques peuvent être superposées, n pouvant être compris entre 2 et 30, entre 2 et 20, entre 2 et 15, de préférence entre 3 et 12, préférentiellement entre 4 et 8, plus préférentiellement entre 5 et 7, encore plus préférentiellement 6, en alternant des plaques ZM et des plaques ZS,
- une plaque de zone de collecteurs (ZC) terminant l'empilement à sa base, et une plaque de zone de répartition (ZR) débutant l'empilement à son sommet,
- la séquence d'empilement, de haut en bas, est donc ZR : n (ZM+ZS) : ZC.

Dans une plaque ZS, la séparation peut être obtenue par une lèvre et par différents types de plaques ZS de différentes dimensions et différentes formes pour couvrir toutes les applications.
Alternativement, un ensemble de plaques peuvent être préassemblé en cassette. Un dispositif de régulation de la vitesse d'écoulement des fractions de flux concentrées peut être situé dans la zone du collecteur final de fluide, et peut être asservi à une mesure de conductivité ou de débit.
Un dispositif de régulation de la vitesse d'écoulement de la fraction d'eau dessalée ou dé-ionisée, peut être situé dans la zone du collecteur final de fluide, et peut être asservi à une mesure de conductivité ou de débit.

Certaines caractéristiques de l'invention qui sont décrites sous forme de mode de réalisation séparés, peuvent aussi être fournies en combinaison dans un mode de réalisation unique. A l'opposé certaines caractéristiques de l'invention qui sont décrites sous forme de mode de réalisation en combinaison dans un mode de réalisation unique, peuvent aussi être fournies séparément sous forme de plusieurs modes de réalisation séparés.

## Revendications

1. **Microréacteur** (1) de dessalement d'un fluide salé (2) comportant au moins un compartiment (C1) de migration des ions, au moins un compartiment (C2) de séparation des ions et au moins un compartiment (C3) collecteur de fluide:
**ledit compartiment (C1) de migration des ions comprenant** :
- au-moins une ouverture (1B) d'entrée du fluide salé (2),
- au-moins un canal principal (1A) d'écoulement du fluide salé (2),
- au-moins une première électrode cathodique (11A) et au-moins une première électrode anodique (12A),
- au-moins un premier canal latéral supérieur (6) d'évacuation des cations sensiblement perpendiculaire audit canal principal (1A),
- au-moins un second canal latéral supérieur (5) d'évacuation des anions sensiblement perpendiculaire audit canal principal (1A),
**ledit compartiment (C2) de séparation des ions comprenant** :
- au moins une lèvre supérieure gauche (22) et au moins une lèvre supérieure droite (23) faisant saillie à l'intérieur du canal principal (1A) permettant de recueillir les ions,
- au-moins une seconde électrode cathodique (11B) et au-moins une seconde électrode anodique (12B),
- au-moins un premier canal latéral (8) d'évacuation des cations sensiblement parallèle audit canal principal (1A),
- au-moins un second canal latéral (7) d'évacuation des anions sensiblement parallèle audit canal principal (1A),
- ledit canal principal (1A) d'écoulement du fluide salé (2) étant situé entre le premier canal latéral (8) et le second canal latéral (7),
- au-moins un premier canal latéral inférieur (6A) d'évacuation des cations sensiblement perpendiculaire audit canal principal (1A),
- au-moins un second canal latéral inférieur (5A) d'évacuation des anions sensiblement perpendiculaire audit canal principal (1A),
**ledit compartiment (C3) collecteur de fluide comprenant** :
- au moins une lèvre inférieure gauche (24) et au moins une lèvre inférieure droite (25) faisant saillie à l'intérieur du canal principal (1A),
- au-moins un réceptacle interne (9) recueillant un fluide non salé (9A),
- au-moins un réceptacle externe (10) recueillant un fluide hautement salé (10A),
**caractérisé en ce que**
lesdites premières et secondes électrodes cathodiques (11A,11B) et lesdites premières et secondes électrodes anodiques (12A,12B) possèdent respectivement chacune une première face (11F,11G,12F,12G) en contact avec de l'air et une seconde face (11E,11H,12E,12H) opposée à ladite première face, ladite seconde face étant en contact direct avec une paroi en plastique (13B,13C,13A,13D), laquelle est directement en contact avec le fluide salé (2).

2. Microréacteur selon la revendication 1, dans lequel l'électrode cathodique (11A,11B) et l'électrode anodique (12A,12B) sont parallèles à une première paroi (13A) et à une seconde paroi (13B) du canal principal (1A) respectivement.

3. Microréacteur selon la revendication 1, dans lequel la longueur du compartiment (C1) de migration des ions est comprise entre 35 mm et 55 mm, sa largeur est comprise entre 20 mm et 30 mm et sa hauteur est comprise entre 10 mm et 20 mm.

4. Microréacteur selon la revendication 1, dans lequel la longueur d'un étage du compartiment (C2) de séparation des ions est comprise entre 30 mm et 50 mm, sa largeur est comprise entre 10 mm et 25 mm et sa hauteur est comprise entre 7 mm et 20 mm.

5. Microréacteur selon la revendication 1, dans lequel la longueur du compartiment (C3) collecteur de fluide est comprise entre 35 mm et 55 mm, sa largeur est comprise entre 20 mm et 30 mm et sa hauteur est comprise entre 10 mm et 20 mm.

6. Microréacteur selon la revendication 1, dans lequel lesdites première et seconde électrodes anodiques (12A,12B) sont placées dans le prolongement vertical l'une de l'autre et lesdites première et seconde électrodes cathodiques (11A,11B) sont aussi placées dans le prolongement vertical l'une de l'autre.

7. Microréacteur selon la revendication 1, dans lequel ledit canal latéral supérieur (6) d'évacuation des cations sépare physiquement lesdites première et seconde électrodes anodiques (12A,12B) et ledit canal latéral supérieur (5) d'évacuation des anions sépare physiquement lesdites première et seconde électrodes cathodiques (11A,11B) respectivement.

8. Microréacteur selon la revendication 1, dans lequel lesdites lèvres supérieures gauches (22) et droites (23) sont de forme pointues avec une partie biseauté faisant face respectivement audit premier canal latéral supérieur (6) d'évacuation des cations et audit second canal latéral supérieur (5) d'évacuation des anions.

9. Microréacteur selon la revendication 1, dans lequel lesdites lèvres inférieures gauches (24) et droites (25) sont de forme pointues avec une partie biseauté faisant face respectivement audit premier canal latéral inférieur (6A) d'évacuation des cations et audit second canal latéral inférieur (5A) d'évacuation des anions.

10. Microréacteur selon la revendication 1, dans lequel un champ électrique entre les électrodes (11) et (12) possède une valeur comprise entre 0,1 et 1000 kV.m⁻¹, de préférence entre 0,2 et 100 kV.m⁻¹, préférentiellement entre 0,5 et 5 kV.m⁻¹.

11. Microréacteur selon la revendication 1, dans lequel plusieurs compartiments identiques (C2) de séparation des ions peuvent être empilés les uns sur les autres.

12. Microréacteur (1) selon les revendications 1 à 11, comprenant une pluralité de compartiments (C2) de séparation des ions, lesdits compartiments (C2) étant mis en série.

13. Microréacteur (1) selon les revendications 1 à 11, comprenant une pluralité de compartiments (C2) de séparation des ions , lesdits compartiments (C2) étant mis en parallèle.

14. Microréacteur (1) selon les revendications 1 à 11, comprenant une pluralité de compartiments (C2) de séparation des ions, ledit microréacteur étant mis en cassette.

15. Procédé de dessalement d'un fluide salé (2) dans un microréacteur défini à la revendication 1, comprenant les étapes suivantes :
- au-moins une première migration des anions vers au moins une première électrode cathodique (11A) et des cations vers au-moins une première électrode anodique (12A),
- séparation respective des cations et des anions de part et d'autre du canal principal (1A) au moyen d'au-moins une lèvre supérieure (22 ;23) faisant saillie vers l'intérieur du canal principal (1A) d'écoulement du fluide salé (2),
- au-moins une seconde migration des anions vers au moins une seconde électrode cathodique (11B) et des cations vers au-moins une seconde électrode anodique (12B),
- réception d'un fluide non salé dans un réservoir (9) et d'un fluide hautement salé dans un réservoir (10), **caractérisé par**
- une mise en contact avec de l'air respectivement d'une première face (11F,11G,12F,12G) desdites premières et secondes électrodes cathodiques (11A,11B) et desdites premières et secondes électrodes anodiques (12A,12B) et,
- par une mise en contact direct avec une paroi en plastique (13B,13C,13A,13D) d'une seconde face (11E,11H,12E,12H) opposée à ladite première face (11F,11G,12F,12G) desdites premières et secondes électrodes cathodiques (11A,11B) et desdites premières et secondes électrodes anodiques (12A,12B) et,
par une mise en contact direct avec le fluide salé (2) de ladite paroi en plastique (13B,13C,13A,13D).

## Patentansprüche

1. **Mikroreaktor** (1) zur Entsalzung eines salzhaltigen Fluids (2), der mindestens einen lonenmigrationsraum (C1), mindestens einen lonentrennraum (C2) und mindestens einen Fluidsammelraum (C3) aufweist, **wobei der lonenmigrationsraum (C1) umfasst:**
- mindestens eine Eintrittsöffnung (1B) für das salzhaltige Fluid (2),
- mindestens einen Hauptströmungskanal (1A) des salzhaltigen Fluids (2),
- mindestens eine erste Kathode (11A) und mindestens eine erste Anode (12A),
- mindestens einen ersten oberen Seitenkanal (6) zum Abführen von Kationen, der im Wesentlichen senkrecht zum Hauptkanal (1A) ist,
- mindestens einen zweiten oberen Seitenkanal (5) zum Abführen von Anionen, der im Wesentlichen senkrecht zum Hauptkanal (1A) ist,
**wobei der lonentrennraum (C2) umfasst:**
- mindestens eine linke obere Lippe (22) und mindestens eine rechte obere Lippe (23), die im Innern des Hauptkanals (1A) vorstehen und ein Auffangen der Ionen ermöglichen, mindestens eine zweite Kathode (11B) und mindestens eine zweite Anode (12B),
- mindestens einen ersten Seitenkanal (8) zum Abführen von Kationen, der im Wesentlichen parallel zum Hauptkanal (1A) ist,
- mindestens einen zweiten Seitenkanal (7) zum Abführen von Anionen, der im Wesentlichen parallel zum Hauptkanal (1A) ist,
- wobei der Hauptströmungskanal (1A) des salzhaltigen Fluids (2) sich zwischen dem ersten Seitenkanal (8) und dem zweiten Seitenkanal (7) befindet,
- mindestens einen ersten unteren Seitenkanal (6A) zum Abführen von Kationen, der im Wesentlichen senkrecht zum Hauptkanal (1A) ist,
- mindestens einen zweiten unteren Seitenkanal (5A) zum Abführen von Anionen, der im Wesentlichen senkrecht zum Hauptkanal (1A) ist,
**wobei der Fluidsammelraum (C3) umfasst:**
- mindestens eine linke untere Lippe (24) und mindestens eine rechte untere Lippe (25), die im Innern des Hauptkanals (1A) vorstehen,
- mindestens einen internen Auffangbehälter (9) zum Auffangen eines nicht-salzhaltigen Fluids (9A),
- mindestens einen externen Auffangbehälter (10) zum Auffangen eines stark salzhaltigen Fluids (10A),
**dadurch gekennzeichnet, dass**
die erste und zweite Kathode (11A, 11B) und die erste und zweite Anode (12A, 12B) jeweils eine erste Seite (11F, 11G, 12F, 12G) in Kontakt mit Luft und eine zweite Seite (11E, 11H, 12E, 12H) gegenüber der ersten Seite aufweisen, wobei die zweite Seite in direktem Kontakt mit einer Kunststoffwand (13B, 13C, 13A, 13D) ist, welche direkt mit dem salzhaltigen Fluid (2) in Kontakt ist.

2. Mikroreaktor nach Anspruch 1, wobei die Kathode (11A, 11B) und die Anode (12A, 12B) parallel zu einer ersten Wand (13A) bzw. einer zweiten Wand (13B) des Hauptkanals (1A) sind.

3. Mikroreaktor nach Anspruch 1, wobei die Länge des lonenmigrationsraums (C1) im Bereich zwischen 35 mm und 55 mm liegt, seine Breite im Bereich zwischen 20 mm und 30 mm liegt und seine Höhe im Bereich zwischen 10 mm und 20 mm liegt.

4. Mikroreaktor nach Anspruch 1, wobei die Länge einer Stufe des Ionentrennraums (C2) im Bereich zwischen 30 mm und 50 mm liegt, seine Breite im Bereich zwischen 10 mm und 25 mm liegt und seine Höhe im Bereich zwischen 7 mm und 20 mm liegt.

5. Mikroreaktor nach Anspruch 1, wobei die Länge des Fluidsammelraums (C3) im Bereich zwischen 35 mm und 55 mm liegt, seine Breite im Bereich zwischen 20 mm und 30 mm liegt und seine Höhe im Bereich zwischen 10 mm und 20 mm liegt.

6. Mikroreaktor nach Anspruch 1, wobei die erste und zweite Anode (12A, 12B) in der vertikalen Verlängerung voneinander angeordnet sind und die erste und zweite Kathode (11A, 11B) ebenfalls in der vertikalen Verlängerung voneinander angeordnet sind.

7. Mikroreaktor nach Anspruch 1, wobei der obere Seitenkanal (6) zum Abführen von Kationen die erste und zweite Anode (12A, 12B) physikalisch trennt bzw. der obere Seitenkanal (5) zum Abführen von Anionen die erste und zweite Kathode (11A, 11B) physikalisch trennt.

8. Mikroreaktor nach Anspruch 1, wobei die linke und rechte obere Lippe (22, 23) spitz zulaufend geformt sind, mit einem abgeschrägten Teil, der dem ersten oberen Seitenkanal (6) zum Abführen von Kationen bzw. dem zweiten oberen Seitenkanal (5) zum Abführen von Anionen zugewandt ist.

9. Mikroreaktor nach Anspruch 1, wobei die linke und rechte untere Lippe (24, 25) spitz zulaufend geformt sind, mit einem abgeschrägten Teil, der dem ersten unteren Seitenkanal (6A) zum Abführen von Kationen bzw. dem zweiten unteren Seitenkanal (5A) zum Abführen von Anionen zugewandt ist.

10. Mikroreaktor nach Anspruch 1, wobei ein elektrisches Feld zwischen den Elektroden (11) und (12) einen Wert im Bereich zwischen 0,1 und 1000 kV.m⁻¹, vorzugsweise zwischen 0,2 und 100 kV.m⁻¹, besonders bevorzugt zwischen 0,5 und 5 kV.m⁻¹ aufweist.

11. Mikroreaktor nach Anspruch 1, wobei mehrere identische lonentrennräume (C2) übereinandergestapelt sein können.

12. Mikroreaktor (1) nach den Ansprüchen 1 bis 11, umfassend eine Vielzahl von lonentrennräumen (C2), wobei die Räume (C2) in Reihe angeordnet sind.

13. Mikroreaktor (1) nach den Ansprüchen 1 bis 11, umfassend eine Vielzahl von Ionentrennräumen (C2), wobei die Räume (C2) parallel angeordnet sind.

14. Mikroreaktor (1) nach den Ansprüchen 1 bis 11, umfassend eine Vielzahl von Ionentrennräumen (C2), wobei der Mikroreaktor in einer Kassette angeordnet ist.

15. Verfahren zur Entsalzung eines salzhaltigen Fluids (2) in einem Mikroreaktor nach Anspruch 1, das die folgenden Schritte umfasst:
- mindestens ein erstes Migrieren von Anionen zu mindestens einer ersten Kathode (11A) und von Kationen zu mindestens einer ersten Anode (12A),
- jeweils Trennen der Kationen und Anionen auf beiden Seiten des Hauptkanals (1A) mithilfe mindestens einer oberen Lippe (22; 23), die in den Hauptströmungskanal (1A) des salzhaltigen Fluids (2) vorsteht,
- mindestens ein zweites Migrieren von Anionen zu mindestens einer zweiten Kathode (11B) und von Kationen zu mindestens einer zweiten Anode (12B),
- Aufnehmen eines nicht-salzhaltigen Fluids in einem Behälter (9) und eines stark salzhaltigen Fluids in einem Behälter (10), **gekennzeichnet durch**
- ein In-Kontakt-Bringen einer ersten Seite (11F, 11G, 12F, 12G) der ersten und zweiten Kathode (11A, 11B) bzw. der ersten und zweiten Anode (12A, 12B) mit Luft und
- durch ein In-direkten-Kontakt-Bringen einer zweiten Seite (11E, 11H, 12E, 12H), gegenüber der ersten Seite (11F, 11G, 12F, 12G), der ersten und zweiten Kathode (11A, 11B) und der ersten und zweiten Anode (12A, 12B) mit einer Kunststoffwand (13B, 13C, 13A, 13D) und
durch ein In-direkten-Kontakt-Bringen der Kunststoffwand (13B, 13C, 13A, 13D) mit dem salzhaltigen Fluid (2).

## Claims

1. **Microreactor** (1) for the desalination of a saline fluid (2), comprising at least one ion migration compartment (C1), at least one ion separation compartment (C2) and at least one fluid collecting compartment (C3): **said ion migration compartment (C1) comprising:**
- at least one inlet opening (1B) for the saline fluid (2),
- at least one main channel (1A) for the flow of saline fluid (2),
- at least one first cathode electrode (11A) and at least one first anode electrode (12A),
- at least one first upper lateral channel (6) for the evacuation of cations, substantially perpendicular to said main channel (1A),
- at least one second upper lateral channel (5) for the evacuation of anions, substantially perpendicular to said main channel (1A),
**said ion separation compartment (C2) comprising:**
- at least one left upper lip (22) and at least one right upper lip (23) projecting inside said main channel (1A) allowing collection of the ions, at least one second cathode electrode (11B) and at least one second anode electrode (12B),
- at least one first lateral channel (8) for the evacuation of cations, substantially parallel to said main channel (1A),
- at least one second lateral channel (7) for the evacuation of anions, substantially parallel to said main channel (1A),
- said main channel (1A) for the flow of saline fluid (2) being positioned between the first lateral channel (8) and the second lateral channel (7),
- at least one first lower lateral channel (6A) for the evacuation of cations, substantially perpendicular to said main channel (1A),
- at least one second lower lateral channel (5A) for the evacuation of anions, substantially perpendicular to said main channel (1A),
**said fluid collection compartment (C3) comprising:**
- at least one left lower lip (24) and at least one right lower lip (25) projecting inside the main channel (1A),
- at least one inner vessel (9) collecting a non-saline fluid (9A),
- at least one external vessel (10) collecting a highly saline fluid (10A),
**characterised in that**
said first and second cathode electrodes (11A, 11B) and said first and second anode electrodes (12A, 12B) each respectively have a first surface (11F, 11G, 12F, 12G) in contact with the air and a second surface (11E, 11H, 12E, 12H) opposite said first surface, said second surface being in direct contact with a plastics wall (13B, 13C, 13A, 13D) which is in direct contact with the saline fluid (2).

2. The microreactor according to claim 1, wherein the cathode electrode (11A,11B) and anode electrode (12A, 12B) are parallel to a first wall (13A) and to a second wall (13B) of the main channel (1A), respectively.

3. The microreactor according to claim 1, wherein the length of the ion migration compartment (C1) is between 35 mm and 55 mm, its width is between 20 mm and 30 mm and its height is between 10 mm and 20 mm.

4. The microreactor according to claim 1, wherein the length of a stage of the ion separation compartment (C2) is between 30 mm and 50 mm, its width is between 10 mm and 25 mm and its height is between 7 mm and 20 mm.

5. The microreactor according to claim 1, wherein the length of the fluid collection compartment (C3) is between 35 mm and 55 mm, its width is between 20 mm and 30 mm and its height is between 10 mm and 20 mm.

6. The microreactor according to claim 1, wherein said first and second anode electrodes (12A, 12B) are positioned in the vertical extension of one another, and said first and second cathode electrodes (11A,11B) are also positioned in the vertical extension of one another.

7. The microreactor according to claim 1, wherein said upper lateral channel (6) for the evacuation of cations physically separates said first and second anode electrodes (12A, 12B), and said upper lateral channel (5) for the evacuation of anions physically separates said first and second cathode electrodes (11A, 11B), respectively.

8. The microreactor according to claim 1, wherein said left (22) and right (23) upper lips are of pointed shape having a bevelled portion respectively facing said first upper lateral channel (6) for the evacuation of cations and said second upper lateral channel (5) for the evacuation of anions.

9. The microreactor according to claim 1, wherein said left (24) and right (25) lower lips are of pointed shape having a bevelled portion respectively facing said first lower lateral channel (6A) for the evacuation of cations and said second lower lateral channel (5A) for the evacuation of anions.

10. The microreactor according to claim 1, wherein an electric field between the electrodes (11) and (12) has a value of between 0.1 and 1000 kV.m⁻¹, preferably between 0.2 and 100 kV.m⁻¹, more preferably between 0.5 and 5 kV.m⁻¹.

11. The microreactor according to claim 1, wherein several identical ion separation compartments (C2) can be stacked on one another.

12. The microreactor (1) according to claims 1 to 11, comprising a plurality of ion separation compartments (C2), said compartments (C2) being placed in series.

13. The microreactor (1) according to claims 1 to 11, comprising a plurality of ion separation compartments (C2), said compartments (C2) being placed in parallel.

14. The microreactor (1) according to claims 1 to 11, comprising a plurality of ion separation compartments (C2), said microreactor being placed in a cassette.

15. A method for the desalination of a saline fluid (2) in a microreactor defined in claim 1, comprising the following steps:
- at least one first migration of anions towards at least one first cathode electrode (11A) and of cations towards at least one first anode electrode (12A),
- respective separation of the cations and anions either side of the main channel (1A) by means of at least one upper lip (22, 23) projecting inside the main channel (1A) for the flow of saline fluid (2),
- at least one second migration of the anions towards at least one second cathode electrode (11B) and of cations towards at least one second anode electrode (12B),
- receiving of a non-saline fluid in a container (9) and of a highly saline fluid in a container (10), **characterised by**:
- placing in contact with the air a first surface (11F, 11G, 12F, 12G) of said first and second cathode electrodes (11A,11B) and of said first and second anode electrodes (12A, 12B), respectively, and
- directly placing in contact with a plastics wall (13B, 13C, 13A, 13D) a second surface (11E, 11H, 12E, 12H) opposite said first surface (11F, 11G, 12F, 12G) of said first and second cathode electrodes (11A,11B) and of said first and second anode electrodes (12A, 12B), and
directly placing said plastics wall (13B, 13C, 13A, 13D) in contact with the saline fluid (2).
